# DEMANDE DE BREVET EUROPEEN

(11) **EP 0 554 156 A1**
(43) Date de publication de la demande: **04.08.1993**
(21) Numéro de dépôt: 93400173.6
(22) Date de dépôt: 26.01.1993
(51) Int. Cl.: H04Q 11/04, H04M 11/06, H04N 7/18, H04L 12/00

(54) **Système de communication visiophonique**

(30) Priorité: 30.01.1992 FR 9201008
(71) Demandeur: MATRA COMMUNICATION, F-29101 Quimper (FR)
(72) Inventeur: Hodbert, Francis, F-91300 Chilly Mazarin (FR)
(74) Mandataire: Fruchard, Guy

(57) **Abrégé**

Il comprend au moins deux appareils visiophoniques 2 comportant chacun des organes de communication visiophonique 3, 4 , 5 et un organe 6 d'établissement d'une liaison visiophonique par l'intermédiaire d'un réseau commuté 1 comportant au moins une trame de transmission visiophonique 7,8 et au moins une trame séparée de transmission de données 10, les appareils visiophoniques 2 étant équipés d'une borne de connexion 9 associée à la trame de transmission de données, un organe de commande 11 étant relié à la borne de connexion 9 d'au moins un appareil visiophonique 2, le système comportant en outre au moins une unité télématique 13 comportant un organe de gestion 15 sensible à des signaux de commande émis par l'organe de commande 11 pour délivrer des services disponibles dans l'unité télématique.

## Description

La présente invention concerne un système de communication visiophonique pour réseau numérique à intégration de services (RNIS).

On connaît des systèmes de communication visiophonique comprenant une série d'appareils visiophoniques comportant chacun des organes de communication visiophonique, c'est-à-dire des organes de transmission d'images et de sons, et un organe d'établissement d'une liaison visiophonique par l'intermédiaire d'un réseau commuté de type RNIS.

De tels systèmes permettent d'établir uniquement une liaison point à point c'est-à-dire une liaison entre deux appareils visiophoniques. Pour l'établissement d'une liaison, l'un des utilisateurs compose un numéro d'appel au moyen de l'organe d'établissement d'une liaison, généralement un clavier, qui envoie dans le réseau commuté des signaux d'appel d'un autre appareil visiophonique. Lorsque la liaison est établie entre les deux appareils visiophoniques, l'organe d'établissement de liaison cesse d'avoir des effets.

En particulier il n'existe pas actuellement de système de communication visiophonique équipé d'appareils fonctionnant dans le mode à multifréquences, généralement appelé DTMF (abréviation des termes anglais Dual Tone Multi Frequency), qui est utilisé dans des réseaux téléphoniques pour dialoguer avec des services à valeur ajoutée tels que des services de messagerie vocale ou de conférence à plusieurs interlocuteurs placés en différents points.

Les systèmes de visiophonie actuels, développés pour les réseaux commutés numériques à intégration de services utilisent une structure de trames (par exemple les trames CCITT H 221 et H 242) associant une trame de transmission de signaux visiophoniques et une trame de transmission de données. Les appareils visiophoniques sont alors équipés d'une borne de connexion associée à la trame de transmission de données du réseau pour permettre un échange de données entre les appareils visiophoniques entre lesquels une communication visiophonique a été établie.

La transformation d'un système de communication visiophonique ne fonctionnant pas selon le mode à multifréquences en un système fonctionnant dans ce mode serait très onéreuse.

Un but de la présente invention est de proposer un système permettant de mettre en place des services à valeur ajoutée sans qu'il soit nécessaire de modifier les appareils visiophoniques existants.

En vue de la réalisation de ce but, on propose selon l'invention un système de communication visiophonique comprenant au moins deux appareils visiophoniques comportant chacun des organes de communication visiophonique et un organe d'établissement d'une liaison visiophonique par l'intermédiaire d'un réseau commuté comportant au moins une trame de transmission visiophonique et au moins une trame séparée de transmission de données, les appareils visiophoniques étant équipés d'une borne de connexion associée à la trame de transmission de données, dans lequel un organe de commande est relié à la borne de connexion d'au moins un appareil visiophonique, et le système comporte au moins une unité télématique comportant un organe de gestion sensible à des signaux émis par l'organe de commande pour délivrer des services disponibles dans l'unité télématique.

De préférence, l'organe de commande est lui-même du type télématique et comporte un organe d'affichage de signaux transmis selon la trame de transmission de données et/ou un organe d'impression de signaux transmis selon la trame de transmission de données.

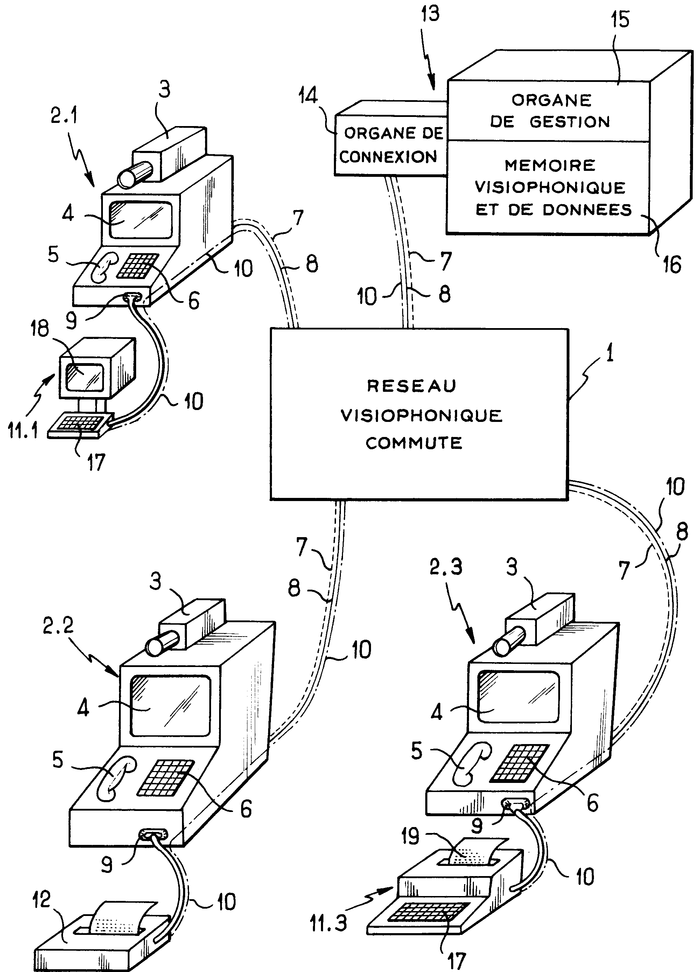

D'autres caractéristiques et avantages de l'invention apparaîtront à la lecture de la description qui suit d'un mode de réalisation particulier non limitatif de l'invention en liaison avec la figure unique ci-jointe qui est une représentation schématique d'un système de communication visiophonique selon l'invention.

En référence au dessin, le système selon l'invention comporte un réseau visiophonique commuté 1 de type RNIS auquel sont associés des appareils visiophoniques désignés d'une façon générale par la référence 2 et de façon plus particulière par les références 2.1, 2.2 et 2.3. Chaque appareil visiophonique 2 comporte des organes de communication visiophonique tels qu'une caméra 3, un écran 4 et un combiné 5. Chaque appareil visiophonique 2 comporte également un organe d'établissement d'une communication visiophonique tel qu'un clavier 6.

Dans les systèmes existants, le clavier 6 est prévu pour assurer uniquement la fonction d'établissement des circuits du réseau auquel les appareils visiophoniques sont connectés. Le clavier 6 sert donc uniquement à établir une liaison point à point avec un autre appareil visiophonique par l'intermédiaire du réseau commuté 1. Lors de la procédure d'établissement d'une communication visiophonique, le clavier 6 sert donc à composer le numéro d'appel de l'autre appareil visiophonique avec lequel une communication doit être établie et dès que cette communication a été établie par le réseau commuté le clavier 6 cesse ses effets, la communication visiophonique étant transmise selon une trame de transmission visiophonique comportant une trame de transmission d'images symbolisée sur la figure par une ligne pointillée 7 et une trame de transmission de sons symbolisée sur la figure par une ligne continue 8.

Les appareils visiophoniques existants sont en outre équipés d'une borne de connexion 9 associée à une trame de transmission de données symbolisée sur la figure par une ligne pointillée mixte 10.

De même que la liaison visiophonique est assurée point à point par les trames de transmission visiophonique 7 et 8, la liaison de données par la trame de transmission de données 10 est assurée point à point par le réseau commuté lors de l'établissement d'une communication au moyen du clavier de commande 6 et, après établissement de la communication, le clavier 6 ne peut pas être utilisé pour envoyer des signaux dans la trame de transmission de données.

Selon l'invention on prévoit de relier à la borne de connexion 9 d'au moins un appareil visiophonique un organe de commande portant d'une façon générale la référence numérique 11 et, d'une façon plus particulière, la référence numérique 11.1 pour l'organe de commande relié à l'appareil visiophonique 2.1 et 11.3 pour l'organe de commande relié à l'appareil visiophonique 2.3. Dans le système illustré, l'appareil visiophonique 2.2 n'est pas relié à un organe de commande mais simplement à un organe d'impression 12 de données reçues par l'intermédiaire de la trame de transmission de données 10.

Par ailleurs, le système de communication visiophonique selon l'invention comporte une unité télématique généralement désignée en 13. Cette unité télématique comporte un organe de connexion 14, un organe de gestion 15 et une mémoire visiophonique et de données 16. L'organe de connexion 14 comporte comme chacun des appareils visiophoniques du système un numéro d'identification permettant d'établir par l'intermédiaire du réseau commuté une liaison point à point entre l'un des appareils visiophoniques 2 et l'unité télématique 13. Lorsqu'une telle liaison est établie, l'organe de connexion 14 assure une association de l'organe de gestion 15 avec la trame de transmission de données de sorte que l'organe de gestion 15 est sensible à des signaux de commande émis par l'organe de commande 11 pour délivrer des services disponibles dans l'unité télématique 13.

A titre d'exemple, dans le système de communication visiophonique illustré sur la figure, l'organe de commande 11.1 est un organe du type micro-ordinateur comportant un clavier 17 et un écran 18 servant d'organe d'affichage de signaux transmis selon la trame de transmission de données.

Lorsqu'un utilisateur de l'appareil visiophonique 2.1 souhaite utiliser les services de l'unité télématique 13 il compose sur le clavier 6 de l'appareil visiophonique 2.1 le numéro d'appel de l'unité télématique 13. Une communication point à point est alors établie par le réseau commuté entre l'appareil visiophonique 2.1 et l'unité télématique 13. Le clavier 6 devient alors sans effet mais une liaison est établie par la trame de transmission de données entre le clavier 17 de l'organe de commande 11.1 et l'organe de gestion 15 de l'unité télématique 13. Au moyen de ce clavier l'utilisateur peut donc commander l'un des services de l'unité télématique 13 en composant les codes correspondants au service demandé. Pour permettre à l'utilisateur de connaître le code correspondant au service recherché, on prévoit de préférence qu'au moment de l'établissement de la communication entre l'appareil visiophonique 2.1 et l'unité télématique 13 l'organe de gestion commande l'émission de signaux visiophoniques à partir de la mémoire visiophonique, par exemple pour envoyer sur l'écran 4 la liste des services proposés avec le code correspondant. Par exemple, si l'unité télématique 13 est une banque de données, la première image envoyée sur l'écran 4 de l'appareil visiophonique 2.1 est la liste des documents stockés ou la liste des têtes de chapitre d'une classification des documents. Lorsque l'utilisateur sélectionne un document au moyen du clavier 17 de l'organe de commande 11.1, l'organe de gestion 15 agit sur la mémoire pour envoyer des signaux visiophoniques permettant l'affichage du document sélectionné sur l'écran 4 de l'appareil visiophonique 2.1. Dans le cas illustré où l'organe de commande 11.1 comporte également un organe d'affichage 18 on peut également prévoir d'envoyer le menu sous forme de signaux de données qui sont transmis par la trame de transmission de données 10 à l'organe d'affichage 18 de sorte que l'utilisateur peut consulter un document sur l'écran 4 tout en continuant à avoir sous les yeux le menu qui reste affiché sur l'écran 18.

On remarquera que l'unité télématique 13 peut être réalisée selon une architecture semblable aux unités télématiques actuellement utilisées sur les réseaux téléphoniques pour réaliser des services très variés tels que des services de messagerie visiophonique ou des services de mise en communication de plusieurs interlocuteurs, l'organe de gestion 15 de l'unité télématique 13 assurant à chaque fois les opérations nécessaires à la réalisation du service. On remarquera également que l'utilisation d'un organe de commande 11 relié à la borne de connexion 9 d'un appareil visiophonique ne fait pas obstacle à l'usage de cette borne de connexion 9 pour la transmission de données sur un appareil visiophonique qui n'est pas équipé d'un organe de commande. Par exemple, si l'utilisateur de l'appareil visiophonique 2.1 souhaite envoyer un message écrit à l'utilisateur de l'appareil visiophonique 2.2, l'utilisateur de l'appareil visiophonique 2.1 utilise le clavier 6 de son appareil pour lancer un appel point à point vers l'appareil visiophonique 2.2 et, lorsque la communication est établie par le réseau commuté, il envoie un message par le clavier 17. Ce message est transmis par la trame de transmission de données 10 jusqu'à l'organe d'impression 12 qui édite le message.

On peut également prévoir un organe de commande comportant seulement un clavier pour envoyer des commandes à l'organe de gestion 15 de l'unité télématique 13. On peut également prévoir comme illustré à propos de l'organe de commande 11.3, un organe de commande comportant un clavier 17 et un organe d'impression 19. Lorsque l'appareil visiophonique 2.3 équipé d'un organe de commande 11.3 comportant une imprimante 19 est en liaison avec une unité télématique 13 contenant des banques de données, il est possible, après consultation d'un document sur l'écran 4 de l'appareil visiophonique de commander par le clavier 17 l'envoi de ce document sur l'organe d'impression 19. Dans ce cas, le document qui est transmis successivement sur l'écran 4 et sur l'organe d'impression 19 doit bien entendu être transmis dans un premier temps sous forme de signaux visiophoniques par la trame de transmission d'images 7 puis dans un second temps sous forme de signaux de données par la trame de transmission de données 10. Pour cela on peut prévoir soit de stocker le même document dans la mémoire 16 de l'unité télématique 13 sous forme de signaux visiophoniques d'une part et de signaux de données d'autre part soit encore stocker ce document dans la mémoire 16 sous une forme unique qui est transformée par l'organe de gestion 15 en signaux visiophoniques ou en signaux de données selon la commande qui a été envoyée par l'organe de commande 11 avec lequel l'unité télématique 13 est en communication.

Bien entendu l'invention n'est pas limitée au mode de réalisation décrit et on peut y apporter des variantes de réalisation sans sortir du cadre de l'invention. En particulier, bien que dans le mode de réalisation illustré les appareils de commande 11 soient séparés de l'appareil visiophonique 2, on peut réaliser des appareils visiophoniques comportant un organe de commande intégré relié de façon interne à la ligne de transmission de données associée à la trame de transmission de données. La borne de connexion 9 est alors virtuelle. Lorsque l'organe de commande est un simple clavier on peut même prévoir d'utiliser un clavier unique dont les impulsions sont tout d'abord transmises dans la trame de transmission visiophonique pour établir une communication avec une unité télématique 13 puis dans la trame de transmission de données lorsque la communication est établie avec l'unité télématique 13, le basculement de la trame de transmission visiophonique à la trame de transmission de données étant réalisé soit manuellement soit automatiquement dès que la communication visiophonique est établie.

## Revendications

1. Système de communication visiophonique comprenant au moins deux appareils visiophoniques (2) comportant chacun des organes de communication visiophonique (3,4,5) et un organe (6) d'établissement d'une liaison visiophonique par l'intermédiaire d'un réseau commuté (1) comportant au moins une trame de transmission visiophonique (7,8) et au moins une trame séparée de transmission de données (10), les appareils visiophoniques (2) étant équipés d'une borne de connexion (9) associée à la trame de transmission de données (10) caractérisé en ce qu'un organe de commande (11) est relié à la borne de connexion (9) d'au moins un appareil visiophonique (2.1, 2.3), et en ce que le système comporte au moins une unité télématique (13) comportant un organe de gestion (15) sensible à des signaux de commande émis par l'organe de commande (11) pour délivrer des services disponibles dans l'unité télématique.

2. Système de communication visiophonique selon la revendication 1 caractérisé en ce que l'organe de commande (11.1) comporte un organe d'affichage (18) de signaux transmis selon la trame de transmission de données (10).

3. Système de communication visiophonique selon la revendication 1 ou la revendication 2 caractérisé en ce que l'organe de commande (11.3) comporte un organe d'impression (19) de signaux transmis selon la trame de transmission de données (10).
